# EUROPÄISCHE PATENTSCHRIFT

(11) **EP 1 672 203 B1**
(45) Veröffentlichungstag und Bekanntmachung des Hinweises auf die Patenterteilung: **08.08.2012**
(21) Anmeldenummer: 05251627.5
(22) Anmeldetag: 17.03.2005
(51) Int. Cl.: F02D 41/00, F02B 37/24

(54) **Verfahren und Vorrichtung zur Motorsteuerung bei einem Kraftfahrzeug**
Method and device for engine control in a vehicle
Procédé et dispositif de commande d'un moteur à combustion interne dans un véhicule

(30) Priorität: 17.12.2004 DE 102004061454
(43) Veröffentlichungstag der Anmeldung: 21.06.2006
(60) Teilanmeldung: 10180370.8
(73) Patentinhaber: Delphi Technologies Holding S.à.r.l., 4940 Bascharage (LU)
(72) Erfinder: Schreurs, Bart, 6700 Waltzing (BE)
(74) Vertreter: Gregory, John David Charles

(56) Entgegenhaltungen:
- EP-A- 1 024 261
- US-A1- 2003 145 591
- US-B1- 6 408 625
- US-B1- 6 672 060

## Beschreibung

Die Erfindung betrifft ein Verfahren zur Motorsteuerung der im Oberbegriff des Anspruchs 1 angegeben Art sowie eine nach einem solchen Verfahren arbeitende Vorrichtung, z.B. eine Motorelektronik in der das Verfahren implementiert ist. Ein Verfahren der genannten Art ist in der US 2003/145591 beschrieben.

Bekannt ist, bei Verbrennungsmotoren, namentlich bei Dieselmotoren, mit den Abgasen eine Turbine anzutreiben, die wiederum, z.B. über eine gemeinsame Achse, einen Kompressor antreibt, der komprimierte Frischluft in den Verbrennungsmotor, im Folgenden häufig kurz nur als Motor bezeichnet, fördert.

In erster Näherung ist das vom Kompressor abgegebene Luftvolumen proportional zur Drehzahl der Turbine, welche wiederum proportional zur abgegebenen Abgasmenge und damit proportional zur Drehzahl des Motors ist. Wünschenswert wäre aber, den durch den Kompressor zu erzielenden Leistungsgewinn für den Motor über dessen gesamten Drehzahlbereich gleichmäßig zur Verfügung zu haben. In diesem Zusammenhang sind Turbinen mit variabler Geometrie (Variable Geometry Turbine = VGT), im Folgenden kurz als VGT bezeichnet, bekannt geworden. Bei solchen VGT wird die Geometrie z.B. bei geringen Abgasmengen derart angepasst dass ausreichend Energie von der Turbine zum Antrieb des Kompressors zur Verfügung steht, so dass dieser das erforderliche Luftvolumen liefern kann.

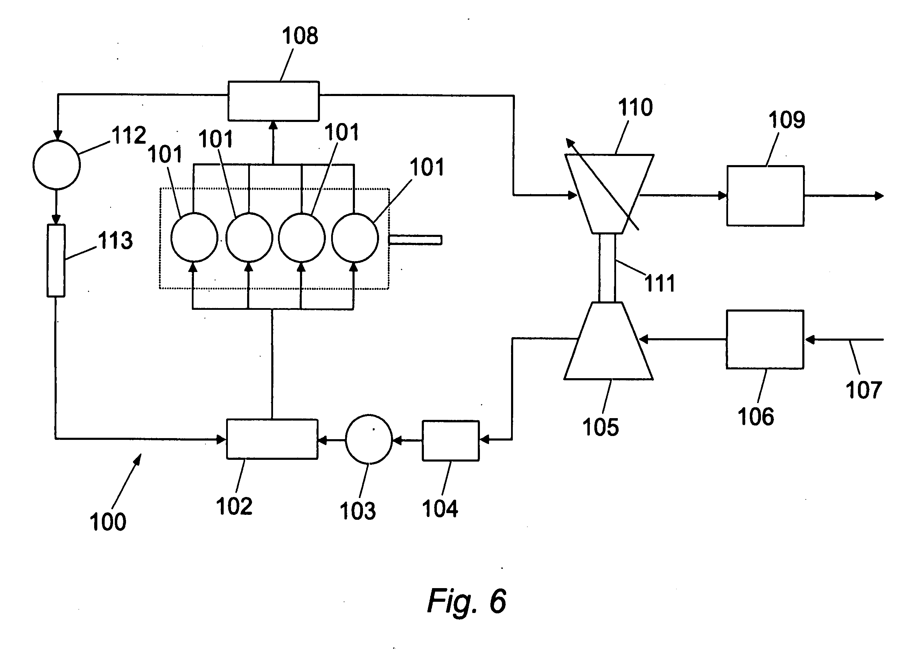

Fig. 6 zeigt ein schematisch vereinfachtes Blockschaltbild eines Verbrennungsmotors 100 am Beispiel eines Dieselmotors, wobei der Motorblock nur durch vier schematisch angedeutete Zylinder 101 dargestellt ist.

Dem Motorblock in Richtung des Massenflusses stromaufwärts vorgelagert ist ein Einlasskrümmer 102 (intake manifold), eine Drosselklappe 103 (throttle) und ein Frischluftkühler 104 (inter-cooler). Daran schließt sich ein Kompressor 105 und ein Luftfilter 106 an. Am Eingang des Luftfilters 106 befindet sich ein Frischlufteinlass 107. Entsprechend sind dem Motorblock in Richtung des Massenflusses stromabwärts nachgelagert ein Auslasskrümmer 108 (exhaust manifold) und in Richtung des Auspuffs 109 (exhaust line) noch eine Turbine, insbesondere eine Turbine mit variabler Geometrie 110 (VGT = variable geometry turbine), die vom Abgas angetrieben wird und mit dem Kompressor 105 z.B. über eine gemeinsame Welle 111 zu dessen Antrieb verbunden ist. Zur Abgasrückführung ist zumindest ein Teil des Abgases vom Auslasskrümmer 108 über ein EGR Ventil 112 (EGR = exhaust gas recirculation) und einen EGR Kühler 113 zum Einlasskrümmer 102 und damit in den Motor rückführbar.

Bei dem aus der US 2003/145591 bekannten Verfahren wird in Abhängigkeit von der Kraftstoffmenge und der Motorgeschwindigkeit ein Sollkompressordruck und in Abhängigkeit von diesem und dem Umgebungsdruck anhand eines Sollkompressordruck-Korrekturmoduls ein korrigierter Sollkompressordruck bestimmt. Dabei wird mittels des Korrekturmoduls in Abhängigkeit von dem Umgebungsdruck, der Motorgeschwindigkeit und einer Turboladergeschwindigkeitsgrenze ein maximal möglicher Kompressordruck bestimmt und der Sollkompressordruck bei einem Überschreiten des maximal möglichen Kompressordruckes auf diesen begrenzt. Anschließend wird der entsprechend korrigierte Sollkompressordruck mit dem tatsächlichen Kompressordruck verglichen und ein entsprechender Fehlerwert ermittelt. Der Fehlerwert wird einem PDI-Modul zugeführt, der einen neuen Wert für die variable Geometrie der Turbine liefert. Dabei kann dieser neue Wert für die variable Geometrie der Turbine direkt vom PDI-Modul bestimmt werden. Alternativ kann über diesen PDI-Modul jedoch auch eine sich gegenüber dem alten Wert ergebende Änderung bestimmt werden. Der neue Wert für die variable Geometrie der Turbine wird in diesem Fall durch die Summe aus dem alten Wert und der festgestellten Änderung gebildet.

Es ist damit eine Aufgabe der Erfindung, ein Verfahren zur Motorsteuerung anzugeben, mit dem sich die Turbine mit variabler Geometrie (VGT) hinsichtlich der Geometrieveränderung derart regeln lässt, dass stets das geforderte Luft/Kraftstoff Gemisch zur Verfügung steht und damit der Motor stets in einem optimalen Leistungsbereich mit minimalem Schadstoffausstoß arbeitet.

Diese Aufgabe wird hinsichtlich des Verfahrens mit den Merkmalen des Anspruchs 1 gelöst. In den Unteransprüchen 2 bis 8 sind vorteilhafte Ausgetaltungen des erfindungsgemäßen Verfahrens angegeben. Hinsichtlich der Vorrichtung wird die Aufgabe mit einer nach dem Verfahren arbeitenden Vorrichtung gelöst, z.B. einer Motorsteuerung, in der das Verfahren elektronisch, als Software oder in einer Mischform, also teilweise elektronisch und teilweise in Software implementiert ist.

Mit der vorteilhaften Ausgetaltung des erfindungsgemäßen Verfahrens nach Anspruch 4 und einer entsprechenden Ausführungsform der Vorrichtung läßt sich verhindern, dass durch den Kompressor mehr Luft in den Motor gefördert wird, als dieser verarbeiten kann. Ein Zuviel an eingangsseitiger Luftmasse kann nämlich zu einem Zusammenbruch des Massenstroms durch den Motor führen. Dies kann z.B. dann der Fall sein, wenn aufgrund einer vom Kompressor eigentlich benötigten Luftmenge oder Luftmasse die Geometrie der Turbine entsprechend angepasst wird, was aber zu einer Druckerhöhung am Ausgang des Motors führt. Durch die vom Kompressor gelieferte Luftmasse steigt zwar auch der Druck am Eingang des Motors. Der eingangsseitige Druckanstieg ist aber möglicherweise geringer als der durch die Geometrieänderung der Turbine und die damit einhergehende Änderung des effektiven Querschnitts der Turbine bewirkte ausgangsseitige Druckanstieg. Wenn die Differenz des ein- und ausgangsseitigen Druckanstiegs bestimmte, im Wesentlichen motorspezifische Schwellwerte überschreitet, kann die vom Kompressor gelieferte Luftmasse, die in geeigneter Relation zum zugeführten Kraftstoff steht, nicht mehr in oder durch den Motor geführt werden. Damit kann es zu dem Effekt kommen, dass für eine hinsichtlich Energieausnutzung und Schadstoffminimierung optimale Verbrennung des Kraftstoffs nicht genug Sauerstoff zur Verfügung steht. Die Verbrennung des Kraftstoffs erfolgt also ggf. nur suboptimal. Zum anderen kann es dazu kommen, dass der Massenfluss durch den Motor einbricht, weil das Verhältnis zwischen eingangsseitig zugeführten Massen und ausgangsseitig abgeführten Massen und der damit bedingten ein- und ausgangsseitigen Druckverhältnisse nicht mehr stimmt.

Mit der vorteilhaften Ausgestaltung des erfindungsgemäßen Verfahrens nach Anspruch 4 bzw. der entsprechenden Ausführungsform wird also auch dieses Problem gelöst.

Nachfolgend wird ein Ausführungsbeispiel der Erfindung sowie weitere bevorzugte Ausführungsformen anhand der Zeichnung näher erläutert. Einander entsprechende Gegenstände oder Elemente sind in allen Figuren mit den gleichen Bezugszeichen versehen.

Darin zeigen
- Fig. 1: ein vereinfachtes Blockschaltbild für eine VGT Steuerung,
- Fig. 2: eine exemplarische Darstellung eines Kompressorkennfeldes,
- Fig. 3: ein vereinfachtes Blockschaltbild für eine VGT Regelung,
- Fig. 4: ein vereinfachtes Blockschaltbild für eine um eine Begrenzung ergänzte VGT Regelung,
- Fig. 5: eine exemplarische Darstellung eines Turbinenkennfeldes und
- Fig. 6: ein schematisch vereinfachtes Blockschaltbild eines Verbrennungsmotors mit einer Turbine mit variabler Geometrie.

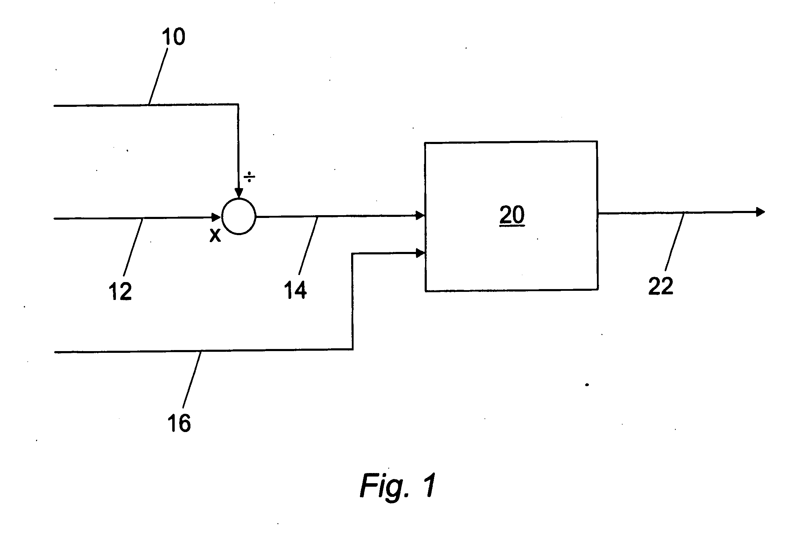

Fig. 1 zeigt ein vereinfachtes Blockschaltbild für eine Steuerung einer Turbine mit variabler Geometrie - "VGT-Steuerung". Die Turbine selbst wie auch der von dieser angetriebene Kompressor und schließlich der Verbrennungsmotor sind nicht gezeigt.

Als Eingangswerte werden der Steuerung zunächst der Umgebungsdruck 10 und der geforderte Kompressordruck (Sollkompressordruck 12) zugeführt. Durch Division ergibt sich aus diesen Eingangswerten 10, 12 ein gefordertes Kompressionsverhältnis (Sollkompressionsverhältnis 14), das dem Verhältnis zwischen dem Druck am Eingang und am Ausgang des Kompressors entspricht. Zur weiteren Optimierung des Verfahrens ist es möglich, in dem Eingangswert Umgebungsdruck 10 auch noch den Druckabfall in der Ansaugleitung zu berücksichtigen. Der Eingangswert Umgebungsdruck 10 entspricht dann dem tatsächlichen Umgebungsluftdruck abzüglich dem Druckverlust in der Ansaugleitung.

Als weiterer Eingangswert wird der Steuerung ein Maß für den Massenfluss 16, nämlich eine ggf. geeignet gewichtete Summe aus Luftmassenfluss im Kompressor und Kraftstofffluss, d.h. insbesondere Kraftstofffluss in den Motor, zugeführt.

Die oben beschriebenen Eingangswerte 14, 16 werden in einer VGT Positionsberechnung 20 verarbeitet und es wird eine VGT Position 22 ausgegeben, die einem nicht dargestellten Stellglied zur Veränderung der Geometrie der VGT zugeführt werden kann. Die Veränderung der Geometrie oder des effektiven Querschnitts der VGT 110 erfolgt bevorzugt durch Verstellung von Leitschaufeln oder dergleichen, sog. "vanes", die um das Turbinenrad herum angeordnet sind. Die Leitschaufeln sind drehbar gelagert und können zwischen Stellungen wie "geschlossen" und "geöffnet" kontinuierlich oder zumindest im Wesentlichen kontinuierlich verstellt werden. Zur Ansteuerung des Stellgliedes wird bevorzugt als VGT Position 22 ein Prozentwert hinsichtlich des Öffnungs- oder Schließungszustandes abgegeben. Eine VGT Position 22 von "30 %" bedeutet also z.B. "30 % geschlossen". Sämtliche Leitbleche der VGT 110 werden daraufhin in die entsprechende Position gebracht.

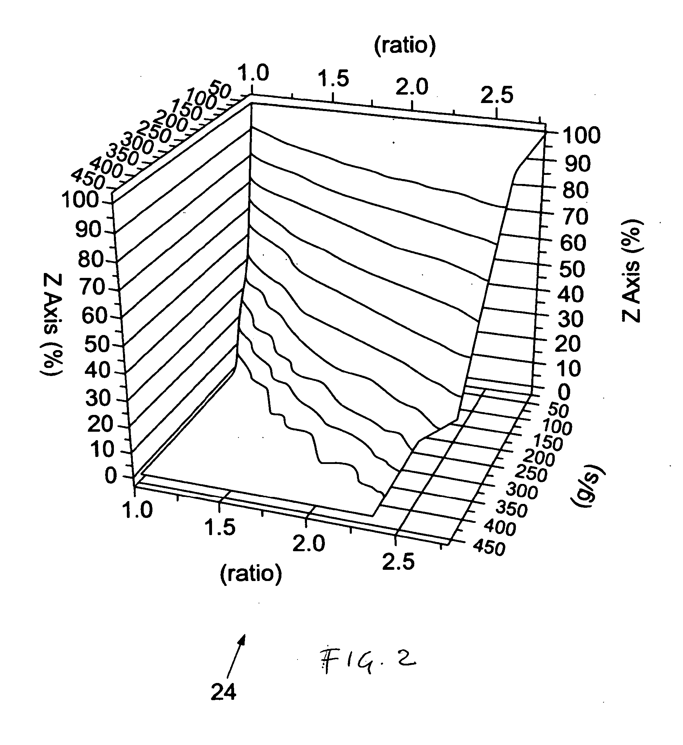

Die Ableitung der VGT Position 22 erfolgt mittels der VGT Positionsberechnung 20 im Wesentlichen anhand eines exemplarisch in Fig. 2 dargestellten Kennlinienfeldes, das zur Referenzierung als Kompressorkennfeld 24 bezeichnet wird, oder einer Schar entsprechender Kennlinienfelder. Bei dem Kompressorkennfeld 24 handelt es sich um ein dreidimensionales Kennfeld. Auf der mit "ratio" bezeichneten x-Achse ist ein Kompressionsverhältnis abgetragen. Auf der mit "g/s" bezeichneten y-Achse ist ein Massenstrom abgetragen. Auf der mit "Z Axis" bezeichneten z-Achse ist schließlich in Prozent eine Positionsinformation für die VGT 110 abgetragen. Mit dem über der x-Achse abgetragenen ersten Eingangswert hinsichtlich des Sollkompressionsverhältnisses 14 und dem über der y-Achse abgetragenen zweiten Eingangswert hinsichtlich des Massenflusses 16 lässt sich auf der z-Achse direkt die Positionsinformation oder zumindest ein Maß für die Positionsinformation zur Generierung der VGT Position 22 ablesen. Mit der Ansteuerung des Stellgliedes für die VGT 110 ist die VGT-Steuerung abgeschlossen.

Im Weiteren wird eine Weiterbildung der VGT-Steuerung zu einer VGT-Regelung mit selbständiger erfinderischer Qualität beschrieben.

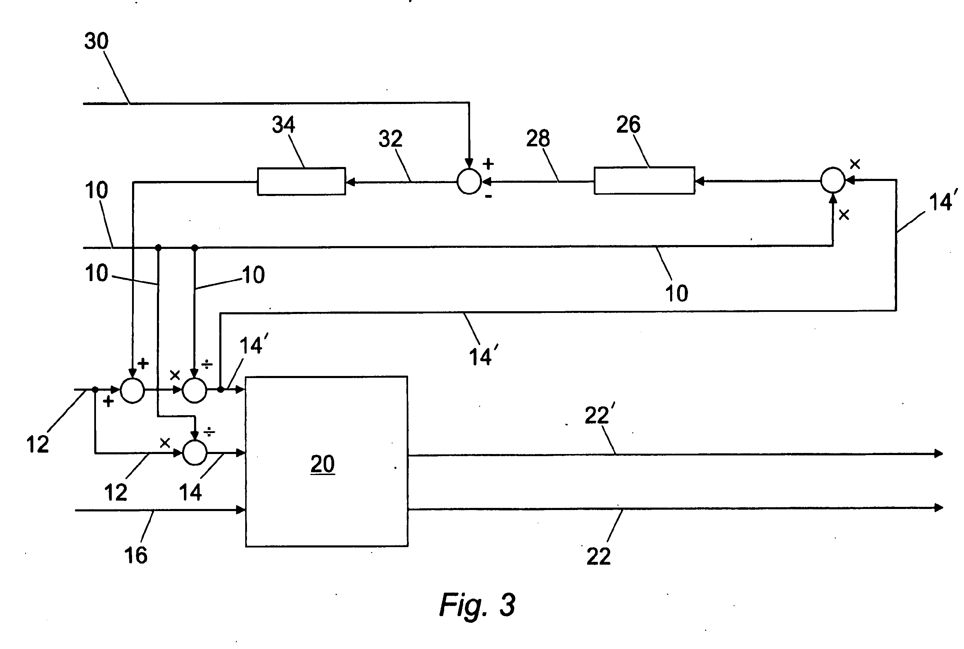

Fig. 3 zeigt dazu ein schematisch vereinfachtes Blockschaltbild der VGT-Regelung, wobei die bereits im Zusammenhang mit Fig. 1 erläuterten Element nicht erneut beschrieben werden.

Für die VGT-Regelung ist ein weiterer Eingang für die VGT Positionsberechnung 20 gezeigt. Der Eingangswert resultiert im Wesentlichen aus einer Division der Eingangswerte Umgebungsdruck 10 und Sollkompressordruck 12 wie bei der VGT-Steuerung und stellt entsprechend ein Sollkompressionsverhältnis dar. Zur Unterscheidung vom Sollkompressionsverhältnis 14 im "Steuerungszweig" wird das entsprechende Sollkompressionsverhältnis im Regelungszweig als Regelungssollkompressionsverhältnis 14' bezeichnet. Die zusätzliche Berücksichtigung des mit der Rückkopplung auf den Eingang der Regelung zurückgeführten Korrekturwertes wird im weiteren Verlauf der Beschreibung erläutert.

Am Ausgang der VGT Positionsberechnung 20 steht wieder die VGT Position 22 aufgrund der Steuerung, wie zuvor erläutert, und nunmehr zusätzlich eine geregelte VGT Position 22' zur Verfügung. Die geregelte VGT Position 22' wird dem erneut nicht dargestellten Stellglied für die VGT 110 zugeführt. Bei intakter VGT Regelung wird die aus der VGT Steuerung resultierende VGT Position 22 selbstverständlich dem Stellglied für die VGT 110 nicht mehr zugeführt. Für den gesamten Aspekt der VGT Regelung gilt, dass die Signalpfade, die sich nur auf die VGT Steuerung beziehen, entbehrlich sind. Es kann jedoch günstig sein, bei der Implementierung des erfindungsgemäßen Verfahrens die VGT Steuerung und die VGT Regelung parallel zu implementieren, so dass z.B. im Falle eines Ausfalls der VGT Regelung jederzeit auf die VGT Steuerung zurückgegriffen werden kann.

Für die Regelung wird nun das Regelungssollkompressionsverhältnis 14' als Eingang für den Rückkopplungszweig verwendet. Durch Multiplikation mit dem Umgebungsdruck 10 ergibt sich der momentan anstehende Komprssordruck, der als Eingangssignal einem Filter 26 zugeführt wird. Das Filter 26 ist bevorzugt ein Verzögerungsglied erster Ordnung (first order lag and delay) zur Nachbildung der Dynamik des Kompressors. Der Filer 26 fungiert als Beobachter. Der Ausgang des Filters 26 entspricht damit einem modellierten Kompressordruck 28 und wird von einem den tatsächlichen Kompressordruck 30 repräsentierenden Messwert subtrahiert. Die Differenz dieser beiden Werte wird im Folgenden zur Referenzierung als Kompressorfehler 32 bezeichnet. Der Kompressorfehler 32 ergibt sich im Wesentlichen aus unvermeidlichen Fehlern im empirisch ermittelten Kompressorkennfeld 24, das die tatsächlichen Verhältnisse niemals exakt abbilden kann. Diesen verbleibenden Fehler in der Modellierung des Systems, nämlich mit dem Kompressorkennfeld 24, gleicht man gemäß der Erfindung damit aus, dass der Kompressorfehler 32 auf den Eingang der Regelung zurückgeführt wird. Allerdings erfolgt dies gemäß einem weiteren selbständig erfinderischen Aspekt nicht direkt sondern indirekt über einen zwischengeschalteten Regler 34, der insbesondere als PI-Regler ausgeführt ist.

Die selbstständige erfinderische Qualität ergibt sich zum einen daraus, dass es unüblich ist, einen Regler im Rückkopplungszweig einer Regelung vorzusehen. Zum anderen wäre es zwar möglich, den Ausgang des Reglers 34 direkt zu verwenden um die Ansteuerung des Stellglieds zur Justierung der VGT 110 zu verbessern. Das würde aber eine Anpassung der Reglerparameter an die jeweilige Betriebssituation, also z.B. den Gang der mittels des Getriebes momentan ausgewählt ist, usw., erfordern. Darüber hinaus läge ein nichtlineares System vor, das entsprechend einen nichtlinearen Regler oder eine Mehrzahl linearer Regler für einzelne linearisierte Betriebssituationen erfordern würde. Schließlich ergäbe sich noch die Problematik, dass ein Regler für eine direkte Ansteuerung des Stellgliedes für eine besonders hohe Dynamik ausgelegt werden müsste. Das Problem hinsichtlich der erhöhten Dynamik kann man sich leicht verdeutlichen, wenn man als Eingangssignal 12 eine Sprungfunktion annimmt. Aufgrund der Trägheit des Kompressors ist die Sprungantwort selbst keine Sprungfunktion. Der tatsächliche Kompressordruck 30 steigt also nur langsam, z.B. wie beim Aufladen eines Kondensators in einem RC-Glied an. Der Fehler zwischen einer solchen "Ladekurve" und einer Sprungfunktion ist besonders direkt nach dem Sprung sehr groß, so dass ein Regler über eine entsprechende Dynamik verfügen müsste um solche Fehler auszuregeln. Bei der erfindungsgemäß gewählten Position des Reglers ergeben sich jedoch andere Verhältnisse. Als Eingang für den Regler 34 ergibt sich hier die Differenz zwischen Ausgang des Beobachters 26 und tatsächlichem Kompressordruck 30. Beide Werte steigen auch bei einer Sprungfunktion am Eingang 12 der Regelung kontinuierlich, nämlich einmal entsprechend der tatsächlichen Trägheit des Kompressors (tatsächlicher Kompressordruck 30) und einmal entsprechend der Trägheit des Kompressormodells, nämlich dem Filter 26 (modellierter Kompressordruck 28) an. Die Differenz zwischen diesen beiden Werten ist stets klein, insbesondere klein gegenüber einer zum Vergleich herangezogenen Differenz zwischen einer Sprungfunktion und dem tatsächlichen Kompressordruck 30. Die Anforderungen an die Dynamik des Reglers 34 sind bei der erfindungsgemäß gewählten Verschaltung also erheblich reduziert. Zudem ist, die Gefahr Unerwünschten Überschwingens oder gar Instalbilitatät aufgrund der Regelung reduziert, wenn nicht gar ausgeschlossen, weil der Regler stets nur vergleichsweise geringe Fehler ausregeln muss.

Alle diese Probleme können durch die Erkenntnis der Erfindung vermieden werden, indem der Regler im Rückkopplungszweig vorgesehen wird. Der rückgekoppelte Fehler, der Kompressorfehler 32 wird dann zusammen mit dem Sollkompressordruck 12 wieder der Verarbeitung in der VGT Positionsberechnung 20 unterzogen, was eine "Quasi-Linearisierung" des Systems zur Folge hat. Der vom Regler 34 gelieferte Wert wird durch die zusätzliche (additive) Berücksichtigung des Sollkompressordrucks 12 und der sonstigen Eingangswerte 10, 16, die den "Arbeitspunkt" im Kompressorkennfeld 24 bestimmen, automatisch "an die richtige Position im Kompressorkennfeld 24 verschoben", so dass aus der sich damit insgesamt ergebenden Position im Kompressorkennfeld 24 die resultierende geregelte VGT Position 22' zur Ansteuerung des VGT Stellgliedes ermittelt werden kann.

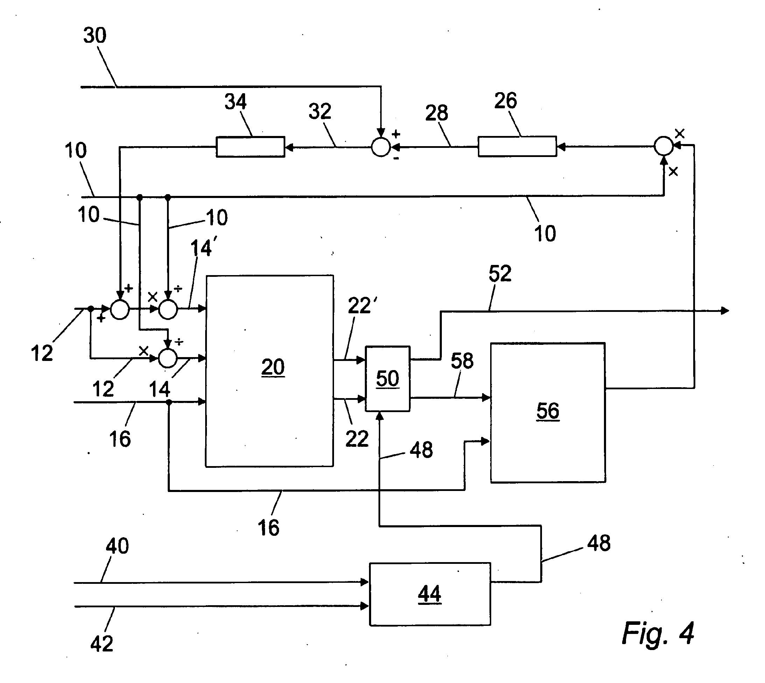

Bei bestimmten Konstellationen kann es vorkommen, dass sich augrund der Regelung eine Stellung für die VGT 110 ergeben würde, bei der der Kompressor ein Luftvolumen zum Motor führt, das tatsächlich nicht durch den Motor geführt werden kann, weil das Verhältnis aus ein- und ausgangseitigem Druck bestimmte motorspezifische Schwellwerte überschreitet. Dann droht ein Zusammenbruch des Massenstroms (Luft, Kraftstoff) durch den Motor. Um dies stets sicher zu vermeiden ist gemäß einem weiteren Aspekt der Erfindung mit selbständiger erfinderischer Qualität eine Grenzwertberücksichtigung vorgesehen, die im Folgenden anhand von Fig. 4 näher erläutert wird.

Für die Grenzwertberücksichtigung werden zwei weitere Eingangswerte verwendet, nämlich zum einen ein maximales Turbinendruckverhältnis 40 und zum anderen ein weiteres Massenflussmaß 42. Dabei ergibt sich das Turbinendruckverhältnis 40 aus einem maximalen Motordruckverhältnis, nämlich dem maximalen Verhältnis aus eingangs- und ausgangsseitigem Druck direkt am Ein- und Auslass des Motors, und dem tatsächlichen Kompressordruck 30. Das Produkt dieser Werte wird durch den Umgebungsdruck 10, ggf. mit Berücksichtigung einer Druckzunahme in der Abgasleitung, dividiert. Der Quotient stellt insgesamt das maximale Turbinendruckverhältnis 40 dar. Das maximale Motordruckverhältnis ist eine motorspezifische Konstante. Übliche Werte für diese Konstante liegen im Bereich von "1,6" bis "1,7". Anstelle einer Konstante ist es hier auch möglich, Werte zu verwenden, die in Ansehung der jeweils aktuellen Druckverhältnisse einen Einbruch des Massenstromes durch den Motor um z.B. nicht mehr als 10% bewirken. Solche Werte sind aus Kurven ermittelbar, die Aussagen über die volumetrische Effizienz (volumetric efficiency) des jeweiligen Motors gestatten. Zum Ersetzen der Konstante ist also lediglich das Ablegen von Daten hinsichtlich dieser volumetrischen Effizienz und deren geeignete Auswertung erforderlich. Das weitere Massenflussmaß 42 ist eine ggf. geeignet gewichtete Summe aus dem Luftmassenfluss in der Turbine und dem aktuellen Kraftstofffluss.

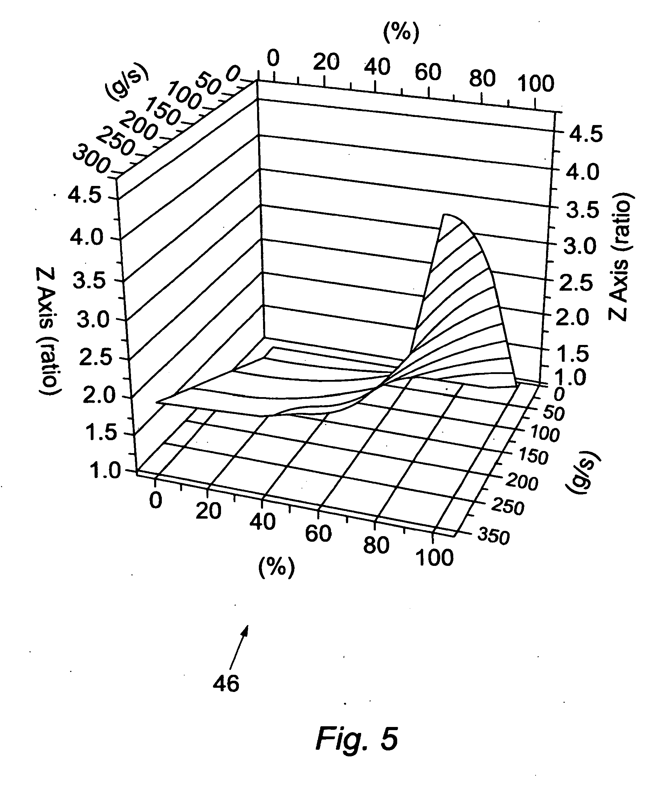

Beide Eingangswerte 40, 42 werden in einer VGT Grenzwertberechnung 44 verarbeitet. Die VGT Grenzwertberechnung 44 erfolgt, ähnlich wie der VGT Positionsberechnung 20, im Wesentlichen anhand eines exemplarisch in Fig. 5 dargestellten Kennlinienfeldes, das zur Referenzierung als Turbinenkennfeld 46 bezeichnet wird, oder einer Schar entsprechender Kennlinienfelder. Bei dem Turbinenkennfeld 46 handelt es sich wieder um ein dreidimensionales Kennfeld. Auf der mit "%" bezeichneten x-Achse ist ein Öffnungs-oder Schließungsverhältnis der Leitbleche oder äquivalenter Elemente in der VGT 110 abgetragen. Auf der mit "g/s" bezeichneten y-Achse ist ein Massenstrom abgetragen. Auf der mit "Z Axis (ratio)" bezeichneten z-Achse ist schließlich ein Turbinendruckverhältnis abgetragen. Mit dem über der z-Achse abgetragenen ersten Eingangswert hinsichtlich des maximalen Turbinendruckverhältnisses 40 und dem über der y-Achse abgetragenen zweiten Eingangswert hinsichtlich des Massenflusses 42 lässt sich auf der x-Achse direkt die maximal mögliche VGT Position, d.h. das maximal mögliche Öffnungs- und Schließungsverhältnis der Leitbleche oder dergleichen ablesen. Der Ausgang der VGT Grenzwertberechnung 44 wird als VGT Grenzwert 48 einem VGT Begrenzer 50 zugeführt. Der VGT Begrenzer hat die Wirkung, dass Eingangswerte 22, 22', also VGT Positionen 22, 22', die im Zusammenhang mit der nachfolgenden evtl. Begrenzung als geforderte VGT Position 22, 22' bezeichnet werden, welche oberhalb des VGT Grenzwertes 48 liegen, genau auf den Wert des VGT Grenzwertes beschränkt werden. Zur Ansteuerung des VGT Stellgliedes kann grundsätzlich entweder ein auf der gesteuerten oder geregelten geforderten VGT Position 22, 22' beruhender, ggf. begrenzter VGT Positionswert 52 verwendet werden. Gezeigt ist die Konstellation, bei der der begrenzte VGT Positionswert 52 auf der geregelten VGT Position 22 basiert.

Für die Regelung wird nun abweichend von der zuvor im Zusammenhang mit Fig. 3 erläuterten Konstellation nicht das Regelungssollkompressionsverhältnis 14' berücksichtigt, das evtl. Begrenzungen außer Acht lassen würde, sondern es wird ein geschätztes Kompressionsverhältnis 54 verwendet, dass sich z.B. aus "inverser Anwendung" des Kompressorkennfeldes 24 ergibt. Die Ermittlung des geschätzten Kompressionsverhältnisses 54 erfolgt mittels einer Schätzwertermittlung 56. Die Schätzwertermittlung erfolgt bevorzugt durch nochmalige Verwendung des bereits bei der VGT Positionsberechnung 20 verwendeten und damit in der Motorsteuerung oder jeder sonstigen Plattform zur Implementation des erfindungsgemäßen Verfahrens vorhandenen Kompressorkennfeldes 24. Eingänge für die Schätzwertermittlung 56 sind ein auf der gesteuerten VGT Position 22 beruhender Ausgang des VGT Begrenzers 50, der im Folgenden zur Referenzierung als begrenzter VGT Steuerungspositionswert 58 bezeichnet wird, und das Maß für den Massenflusses 16, das auch als Eingang für die VGT Positionsberechnung 20 verwendet wird. Im Kompressorkennfeld 24 (vgl.
Fig. 2) werden nun die beiden Eingangswerte 16, 58 über der y-Achse und z-Achse abgetragen und auf der x-Achse des zugehörige Kompressionsverhältnis als geschätztes Kompressionsverhältnis 54 abgelesen. Das geschätzte Kompressionsverhältnis 54 wird wie bei der im Zusammenhang mit Fig. 3 erläuterten Konstellation das Regelungssollkompressionsverhältnis 14' in den Rückkopplungszweig für die Regelung geführt. Die Funktionalität des Rückkopplungszweigs entspricht der bereits im Zusammenhang mit Fig. 3 erläuterten Funktionalität. Die Verwendung des begrenzten VGT Steuerungspositionswert 58 anstelle des anderen Ausgangs des VGT Begrenzers 50, nämlich des begrenzter VGT Positionswerts 52, dass der bei der Steuerung unvermeidliche Restfehler gerade die Grundlage für die Regelung bildet. Bei Verwendung des bereits auf der Regelung beruhenden begrenzten VGT Positionswertes würde, sofern keine Begrenzung auf den VGT Grenzwert 48 erfolgt ist, das geschätzte Kompressionsverhältnis 54 exakt dem Sollkompressionsverhältnis 14 entsprechen, so dass die Schätzwertermittlung 56 und die nochmalige Auswertung des Kompressorkennfeldes 24 überflüssig wäre.

Die vorstehend beschriebene Begrenzung, also die Funktionalität der Funktionsblöcke 44, 50, 56 (VGT Grenzwertberechnung 44, VGT Begrenzer 50 und Schätzwertermittlung 56) ist unabhängig von der zugrunde liegenden Regelung und kann z.B. auch mit einer abweichend von der erfindungsgemäßen Regelung, wie im Zusammenhang mit Fig. 3 erläutert, realisierten Regelung eingesetzt werden.

Damit lässt sich die Erfindung kurz wie folgt darstellen:

Es wird ein Verfahren und eine nach dem Verfahren arbeitende Vorrichtung zur Motorsteuerung bei einem Kraftfahrzeug, insbesondere Verfahren zur Steuerung eines Verbrennungsmotors - Motorsteuerung - bei einem Kraftfahrzeug, nämlich zur optimalen Einstellung eines Luft/Kraftstoffverhältnisses, angegeben, bei dem/bei der sich das Luft/Kraftstoffverhältnis aus dem Verhältnis einer in den Motor eingeführten Luftmasse und einer in den Motor eingeführten Kraftstoffmasse ergibt, wobei die Luftmasse durch einen von einer Turbine mit variabler Geometrie angetriebenen Kompressor beeinflusst wird und wobei eine vom Kompressor gelieferte Luftmasse von einer Energieabgabe der Turbine abhängt, die wiederum vom Abgas des Verbrennungsmotors angetrieben wird, wobei gemäß einem Hauptaspekt der Erfindung vorgesehen ist dass die variable Geometrie der Turbine in Abhängigkeit von einer aufgrund eines zugrunde liegenden, momentan erforderlichen Luft/Kraftstoffverhältnisses geforderten Luftmasse vom Kompressor -Sollkompressordruck 12 - gesteuert und/oder geregelt wird und wobei gemäß zumindest einem weiteren Hauptaspekt der Erfindung vorgesehen ist, dass die Anpassung der Geometrie der Turbine in Abhängigkeit vom möglichen Massenfluss durch den Motor erforderlichenfalls beschränkt wird.

### Bezugszeichenliste

- 10: Umgebungsdruck
- 12: Sollkompressordruck
- 14: Sollkompressionsverhältnis
- 16: Massenfluss
- 20: VGT Positionsberechnung
- 22: VGT Position
- 24: Kompressorkennfeld
- 26: Filter
- 28: modellierter Kompressordruck
- 30: tatsächlicher Kompressordruck
- 32: Kompressorfehler
- 34: Regler
- 40: Turbinendruckverhältnis
- 42: Massenflussmaß
- 44: VGT Grenzwertberechnung
- 46: Turbinenkennfeld
- 48: VGT Grenzwert
- 50: VGT Begrenzer
- 52: VGT Positionswert
- 54: Kompressionsverhältnis
- 56: Schätzwertermittlung
- 58: VGT Steuerungspositionswert

- 100: Verbrennungsmotor
- 101: Zylinder
- 102: Einlasskrümmer
- 103: Drosselklappe
- 104: Frischluftkühle
- 105: Kompressor
- 106: Luftfilter
- 107: Frischlufteinlass
- 108: Auslasskrümmer
- 109: Auspuff
- 110: Turbine mit variabler Geometrie (VGT)
- 111: Welle
- 112: EGR Ventil
- 113: EGR Kühler

## Patentansprüche

1. Verfahren zur Motorsteuerung, insbesondere Steuerung eines Verbrennungsmotors, bei einem Kraftfahrzeug zur optimalen Einstellung eines Luft/Kraftstoffverhältnisses, wobei sich das Luft/Kraftstoffverhältnis aus dem Verhältnis einer in den Motor eingeführten Luftmasse und einer in den Motor eingeführten Kraftstoffmasse ergibt, die Luftmasse durch einen von einer Turbine mit variabler Geometrie angetriebenen Kompressor beeinflusst wird, eine vom Kompressor gelieferte Luftmasse von einer Energieabgabe der Turbine abhängt, die wiederum vom Abgas des Verbrennungsmotors angetrieben wird, die variable Geometrie der Turbine in Abhängigkeit von einer aufgrund eines zugrunde liegenden, momentan erforderlichen Luft/Kraftstoffverhältnisses geforderten Luftmasse vom Kompressor bzw. einem Sollkompressordruck (12) gesteuert und/oder geregelt wird und die Regelung der variablen Geometrie der Turbine in Abhängigkeit vom Sollkompressordruck (12) auf Basis einer Auswertung eines den Kompressor beschreibenden Kompressorkennfeldes (24) erfolgt,
**dadurch gekennzeichnet,**
**dass** ein aus dem Sollkompressordruck (12) abgeleitetes Regelungssollkompressionsverhältnis (14') als Eingang für einen Rückkopplungszweig der Regelung fungiert, wobei der Rückkopplungszweig der Regelung einen als Beobachter oder Modell für den Kompressor fungierenden Filter (26) umfasst, der einen modellierten Kompressordruck (28) liefert, eine Differenz aus modelliertem Kompressordruck (28) und einem insbesondere als weiteren Eingangs- oder Messwert aufgenommenen tatsächlichen Kompressordruck 30 als Eingang für einen im Rückkopplungszweig angeordneten Regler (34) fungiert und der Ausgang des im Rückkopplungszweig angeordneten Reglers (34) zur Anpassung des Sollkompressordrucks (12) auf den Eingang der Regelung zurückgeführt wird.

2. Verfahren nach Anspruch 1,
wobei als weitere Mess-oder Eingangswerte die Mess- oder Eingangswerte einer Steuerung verwendet werden, bei der die Steuerung der variablen Geometrie der Turbine in Abhängigkeit vom Sollkompressordruck (12) auf Basis einer Auswertung des den Kompressor beschreibenden Kompressorkennfeldes (24) erfolgt und als weiterer Mess- oder Eingangswert der Steuerung neben der dem Sollkompressordruck (12) auch ein Mass für den Umgebungsdruck (10) und/oder ein Mass für den Massenfluss (16) verwendet wird.

3. Verfahren nach Anspruch 2,
wobei der Massenfluss (16) eine ggf. geeignet gewichtete Summe aus Luftmassenfluss im Kompressor und Kraftstofffluss ist.

4. Verfahren nach Anspruch 1,
**dadurch gekennzeichnet,**
**dass** die Anpassung der Geometrie der Turbine in Abhängigkeit vom möglichen Massenfluss durch den Motor erforderlichenfalls beschränkt wird.

5. Verfahren nach Anspruch 4,
wobei eine Beschränkung der Anpassung der Geometrie der Turbine auf einer Auswertung eines Turbinenkennfeldes (46) erfolgt.

6. Verfahren nach Anspruch 5,
wobei anhand der Auswertung des Turbinenkennfeldes (46) ein Grenzwert (48) abgeleitet wird.

7. Verfahren nach Anspruch 1 oder 6,
wobei der Grenzwert (48) als Maximalwert für einen bei Auswertung des Kompressorkennfeldes (24) ermittelten Sollwert (22, 22') für die Anpassung der Geometrie der Turbine fungiert.

8. Verfahren nach Anspruch 7,
wobei aus einem ggf. durch den Grenzwert (48) beschränkten Sollwert (22, 22') durch nochmalige geeignete Auswertung des Kompressorkennfeldes (24) ein geschätztes Kompressionsverhältnis (54) abgeleitet wird, das, insbesondere anstelle des Regelungssollkompressionsverhältnisses (14'), als Eingang dem Rückkopplungszweig für die Regelung zugeführt wird.

9. Vorrichtung zur Steuerung eines Verbrennungsmotors bei einem Kraftfahrzeug zur optimalen Einstellung eines Luft/Kraftstoffverhältnisses,
**dadurch gekennzeichnet, dass**
die Vorrichtung nach einem Verfahren gemäß einem oder mehreren der vorangehenden Ansprüche arbeitet und/oder dass die Vorrichtung eine Implementation des Verfahrens gemäß einem oder mehreren der vorangehenden Ansprüche umfasst.

## Claims

1. Method for engine control, in particular control of an internal combustion engine, in a motor vehicle for optimum adjustment of an air-to-fuel ratio, wherein the air-to-fuel ratio results from the ratio of an air mass introduced into the engine and a fuel mass introduced into the engine, the air mass is influenced by a compressor driven by a turbine of variable geometry, an air mass delivered by the compressor depends on an energy output of the turbine which is in turn driven by the exhaust gas of the internal combustion engine, the variable geometry of the turbine is controlled and/or regulated by the compressor or a nominal compressor pressure (12) as a function of an air mass required on account of an underlying, instantaneously required air-to-fuel ratio, and regulation of the variable geometry of the turbine is effected as a function of the nominal compressor pressure (12) on the basis of an evaluation of a compressor characteristic diagram (24) which describes the compressor,
**characterised in that**
a regulation nominal compression ratio (14') derived from the nominal compressor pressure (12) functions as an input for a feedback loop of the regulation system, wherein the feedback loop of the regulation system includes a filter (26) which functions as an observer or model for the compressor and which delivers a modelled compressor pressure (28), a difference between modelled compressor pressure (28) and an actual compressor pressure (30), which is in particular received as a further input or measured value, functions as an input for a regulator (34) disposed in the feedback loop, and the output of the regulator (34) disposed in the feedback loop is fed back to the input of the regulation system for adaptation of the nominal compressor pressure (12).

2. Method according to claim 1,
wherein there are used, as further measured or input values, the measured or input values of a control system in which control of the variable geometry of the turbine is effected as a function of the nominal compressor pressure (12) on the basis of an evaluation of the compressor characteristic diagram (24) which describes the compressor, and in addition to the nominal compressor pressure (12) there is used, as a further measured or input value of the control system, a measure of the ambient pressure (10) and/or a measure of the mass flow (16).

3. Method according to claim 2,
wherein the mass flow (16) is an optionally suitably weighted sum of air mass flow in the compressor and fuel flow.

4. Method according to claim 1,
**characterised in that**
adaptation of the geometry of the turbine is if necessary limited as a function of the possible mass flow through the engine.

5. Method according to claim 4,
wherein a restriction of adaptation of the geometry of the turbine is effected on an evaluation of a turbine characteristic diagram (46).

6. Method according to claim 5,
wherein a limit value (48) is derived with the aid of the evaluation of the turbine characteristic diagram (46).

7. Method according to claim 1 or 6,
wherein the limit value (48) functions as the maximum value for a nominal value (22, 22') determined on evaluation of the compressor characteristic diagram (24) for adaptation of the geometry of the turbine.

8. Method according to claim 7,
wherein an estimated compression ratio (54) is derived from a nominal value (22, 22'), which is optionally limited by the limit value (48), by repeated suitable evaluation of the compressor characteristic diagram (24), which compression ratio is delivered, in particular instead of the regulation nominal compression ratio (14'), as an input to the feedback loop for regulation.

9. Device for the control of an internal combustion engine in a motor vehicle for optimum adjustment of an air-to-fuel ratio,
**characterised in that**
the device works by a method according to one or more of the preceding claims and/or **in that** the device includes implementation of the method according to one or more of the preceding claims.

## Revendications

1. Procédé pour la commande d'un moteur, en particulier la commande d'un moteur à combustion interne, dans un véhicule automobile pour le réglage optimal d'un rapport air/carburant, dans lequel le rapport air/carburant résulte du rapport d'une masse d'air introduite dans le moteur et d'une masse de carburant introduite dans le moteur, la masse d'air est influencée par un compresseur entraîné par une turbine à géométrie variable, une masse d'air fournie par le compresseur dépend d'une énergie fournie par la turbine, laquelle est à son tour entraînée par les gaz d'échappement du moteur à combustion interne, la géométrie variable de la turbine est commandée et/ou régulée en fonction d'une masse d'air requise du compresseur en raison d'un rapport fondamental momentanément nécessaire air/carburant ou en fonction d'une pression de consigne du compresseur (12), et la régulation de la géométrie variable de la turbine a lieu en fonction de la pression de consigne du compresseur (12) en se basant sur une évaluation d'un champ de caractéristiques de compresseur (24) qui décrit le compresseur, **caractérisé en ce qu'**un rapport de compression de consigne de régulation (14'), dérivé de la pression de consigne (12) du compresseur, fait office d'entrée pour une branche de rétroaction de la régulation, ladite branche de rétroaction de la régulation comprend un filtre (26) qui fait office d'observateur ou de modèle pour le compresseur et qui fournit une pression de compresseur modélisée (28), une différence de la pression de compresseur modélisée (28) et d'une pression réelle du compresseur (30), enregistrée en particulier comme une autre valeur d'entrée ou de mesure, fait office d'entrée pour un régulateur (34) agencé dans la branche de rétroaction, et la sortie du régulateur (34) agencé dans la branche de rétroaction est renvoyée à l'entrée de la régulation pour ajuster la pression de consigne (12) du compresseur.

2. Procédé selon la revendication 1,
dans lequel on utilise comme autres valeurs de mesure ou valeurs d'entrée les valeurs de mesure ou valeurs d'entrée d'une commande dans laquelle la commande de la géométrie variable de la turbine a lieu en fonction de la pression de consigne du compresseur (12) en se basant sur une évaluation du champ de caractéristiques de compresseur (24) qui décrit le compresseur, et on utilise à titre d'autres valeurs de mesure ou valeurs d'entrée de la commande, outre la pression de consigne du compresseur (12), également une mesure pour la pression environnante (10) et/ou une mesure pour le flux de masse (16).

3. Procédé selon la revendication 2,
dans lequel le flux de masse (16) est une somme, le cas échéant pondérée de manière appropriée, du flux massique de l'air dans le compresseur et du flux de carburant.

4. Procédé selon la revendication 1,
**caractérisé en ce que** l'ajustement de la géométrie de la turbine en fonction du flux de masse possible à travers le moteur est limité si nécessaire.

5. Procédé selon la revendication 4,
dans lequel une limitation de l'ajustement de la géométrie de la turbine a lieu suite à une évaluation d'un champ de caractéristiques (46) de la turbine.

6. Procédé selon la revendication 5,
dans lequel une valeur limite (48) est dérivée au moyen de l'évaluation du champ de caractéristiques (46) de la turbine.

7. Procédé selon la revendication 1 ou 6,
dans lequel la valeur limite (48) fait office de valeur maximum pour une valeur de consigne (22, 22'), déterminée par évaluation du champ de caractéristiques du compresseur (24), pour l'ajustement de la géométrie de la turbine.

8. Procédé selon la revendication 7,
dans lequel, à partir d'une valeur de consigne (22, 22'), limitée le cas échéant par la valeur limite (48), on dérive par une nouvelle évaluation appropriée du champ de caractéristiques du compresseur (24) un rapport de compression estimé (54) qui est admis à titre d'entrée dans la branche de rétroaction ou la régulation, en particulier à la place du rapport de compression de consigne de régulation (14').

9. Dispositif pour commander un moteur à combustion interne dans un véhicule automobile pour le réglage optimum d'un rapport air/carburant,
**caractérisé en ce que** le dispositif fonctionne suivant un procédé selon l'une ou plusieurs des revendications précédentes et/ou **en ce que** le dispositif inclut une mise en oeuvre du procédé selon l'une ou plusieurs des revendications précédentes.
